# EUROPEAN PATENT APPLICATION

(11) **EP 3 048 378 A1**
(43) Date of publication of application: **27.07.2016**
(21) Application number: 15195183.7
(22) Date of filing: 18.11.2015
(51) Int. Cl.: F24F 1/16, F24F 1/56, F24F 1/36

(54) **OUTDOOR DEVICE FOR AN AIR CONDITIONER**

(30) Priority: 17.12.2014 KR 20140182089; 12.05.2015 KR 20150066090
(71) Applicant: LG Electronics Inc., Seoul 07336 (KR)
(72) Inventor: LIM, Hyunjun, 08592 Seoul (KR); LEE, Hoki, 08592 Seoul (KR); LEE, Jaewan, 08592 Seoul (KR)
(74) Representative: Vossius & Partner Patentanwälte Rechtsanwälte mbB

(57) **Abstract**

An outdoor device for an air conditioner is provided. The outdoor device may include a plurality of suction panels that defines a front surface, both side surfaces, and a rear surface of the outdoor device; a heat exchanger provided inside of the plurality of suction panels, and bent and extended along the four surfaces of the plurality of suction panels; and a base provided under the plurality of suction panels, that define two long sides corresponding to the front and rear surfaces and two short sides corresponding to the both side surfaces. The base may include a base body including a main body seat, on which a compressor may be supported; and an edge portion including an edge seat, which is provided along an outer side of the base body and on which the heat exchanger may be supported. The edge seat may include a first edge seat, on which at least a first portion of the heat exchanger may be seated; a second edge seat, on which a second portion of the heat exchanger may be seated and which has a width greater than the first edge seat; and a discharge hole defined in the second edge seat, and aligned under the heat exchanger.

## Description

An outdoor device for an air conditioner is disclosed herein.

Air conditioners are apparatuses for maintaining air in a predetermined space in a most suitable state according to their usage and purpose. In general, such as air conditioner may include a compressor, a condenser, an expander, and an evaporator. The air conditioner may cool or heat the predetermined space through a refrigeration cycle of compression, condensation, expansion, and evaporation processes of a refrigerant.

The predetermined space may be various places in which the air conditioner is used. For example, when the air conditioner is located in a home or an office, the predetermined space may be an indoor space of a house or a building. On the other hand, when the air conditioner is installed in a car, the predetermined space may be a passenger riding space.

When the air conditioner performs a cooling operation, an outdoor heat exchanger provided in an outdoor unit or device may function as a condenser, and an indoor heat exchanger provided in an indoor unit or device may function as an evaporator. On the other hand, when the air conditioner performs a heating operation, the indoor heat exchanger may function as a condenser, and the outdoor heat exchanger may function as an evaporator.

The outdoor device of the air conditioner may include a base that defines a lower appearance of the outdoor device. The present Applicant applied for and registered Korean Patent No. KR10-1401876 (hereinafter referred to as "related art document"), filed in Korea on May 23, 2014 and entitled "Base Assembly for Outdoor Unit for Air Conditioner", in which a base of outdoor device is disclosed and which is hereby incorporated by reference.

A size or capability of an outdoor device may be different for each model of outdoor device, and a shape or size (length) of a heat exchanger needs to be varied according to the size or capability of the outdoor device. However, according to the base of an outdoor device of an air conditioner according to the related art document, when a shape of the base that supports a heat exchanger is determined, it is difficult to change the shape or size of the heat exchanger. When the shape or length of the heat exchanger is changed without a change in shape of the base, the base has limitations in stably supporting the heat exchanger.

Accordingly, when the shape or size of the heat exchanger is determined, only the base with a shape corresponding thereto may be used. Thus, there is a limitation in that a commonly used base may not be used for heat exchangers with shapes different from each other.

### BRIEF DESCRIPTION OF THE DRAWINGS

Embodiments will be described in detail with reference to the following drawings in which like reference numerals refer to like elements, and wherein:
Fig. 1 is an exploded perspective view illustrating a configuration of an outdoor device of an air conditioner according to an embodiment;
Fig. 2 is a perspective view illustrating a state in which a plurality of components is provided on a base of the outdoor device of Fig. 1;
Fig. 3 is a plan view illustrating a state in which the plurality of components is provided on the base of the outdoor device of Fig. 1;
Fig. 4 is a perspective view of the base of the outdoor device of Fig. 1;
Fig. 5 is a plan view of the base of the outdoor device of Fig. 1;
Fig. 6 is an exploded view illustrating region "A" of Fig. 5;
Fig. 7 is an exploded view illustrating region "B" of Fig. 5;
Fig. 8 is a plan view illustrating a state in which a heat exchanger is installed on the base of the outdoor device of Fig. 1;
Fig. 9 is a plan view illustrating a state in which a heat exchanger according to another embodiment is installed on the base according to an embodiment; and
Fig. 10 is a plan view illustrating a state in which a heat exchanger according to still another embodiment is installed on the base according to an embodiment.

### DETAILED DESCRIPTION

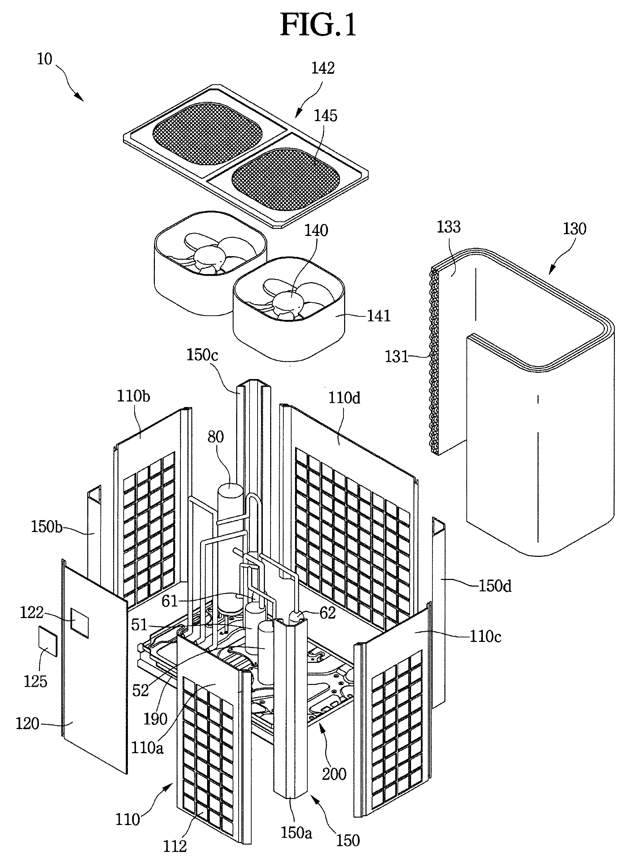

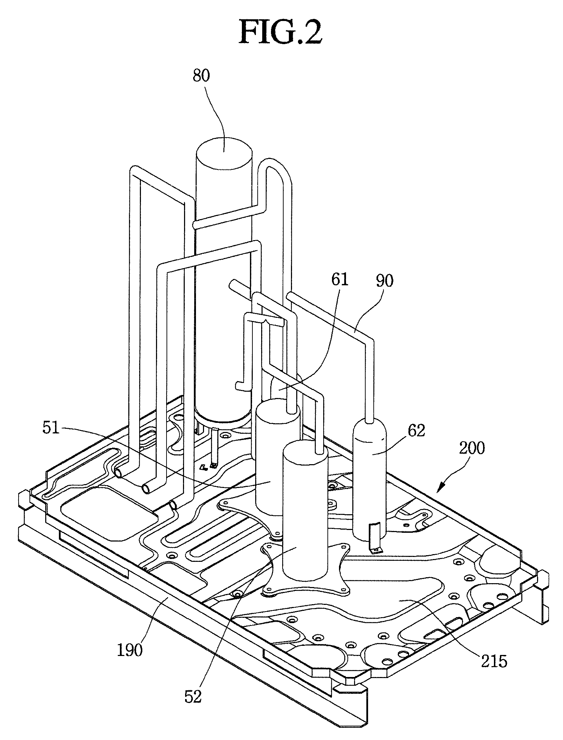

Fig. 1 is an exploded perspective view of an outdoor device of an air conditioner according to an embodiment. Fig. 2 is a perspective view illustrating a state in which a plurality of components is provided on a base of the outdoor device of Fig. 1.

Referring to Figs. 1 and 2, an outdoor unit or device 10 of an air conditioner according to an embodiment may include a base 200 that defines a lower appearance of the outdoor device 10 and supports a plurality of components provided in the outdoor device 10; a plurality of legs 190 provided under the base 200 so that the outdoor device 10 may be supported at or in an installation space; and a cabinet 110, 120, and 150 provided over the base 200.

The plurality of legs 190 may be provided under both sides of the base 200 and seated at or in the installation space, for example, on the ground. The base 200 may have a plate shape including two long sides and two short sides, and the plurality of legs 190 may be provided under the two long sides of the base 200. For example, the base 200 may have a rectangular shape.

The cabinet 110, 120, and 150 may include a suction panel 110. A plurality of the suction panels 110 may be provided, and the plurality of suction panels 110 may be provided along a periphery of the base 200. That is, the plurality of suction panels 110 may extend in an upward direction from an edge of the base 200.

For example, the plurality of suction panels 110 may be provided at first, second, third, and fourth sides of the base 200, for example, front and rear sides, and both left and right sides of the base 200, in Fig. 1. Each of the plurality of suction panels 110 may include a suction grill 112 that introduces outdoor air into the outdoor device 10. The outdoor air may be introduced into the outdoor device 10 from front and rear sides or left and right sides of the outdoor device 10 through the plurality of suction panels 110, for example.

The cabinet 110, 120, 150 may further include a control panel 120. The control panel 120 may be a door openable to provide access to a control box (not shown) provided inside of the outdoor device 10. For example, the control panel 120 may be rotatably or slidably provided. The control panel 120 may be provided on or at a side of the suction panel 110 provided at a front side of the outdoor device 10 from among the plurality of suction panels 110.

A direction of the outdoor device 10 will be defined hereinafter. A surface on which the control panel 120 is provided may be referred to as a "front surface", surfaces provided at both sides of the front surface of the outdoor device 10 may be referred to as "both side surfaces" or "left and right side surfaces", and a surface provided opposite the front surface of the outdoor device 10 may be referred to as a "rear surface".

The plurality of suction panels 110 may include four suction panels. More specifically, the outdoor device 10 may include, at the front surface thereof, the control panel 120 and a first suction panel 110a provided at a side of the control panel 120. The outdoor device 10 may include, at the left side surface thereof, a second suction panel 110b provided to extend in a direction perpendicular to the control panel 120.

The outdoor device 10 may further include, at the right side surface thereof, a third suction panel 110c provided to extend in a direction perpendicular to the first suction panel 110a. Also, the outdoor device 10 may include, at the rear surface thereof, a fourth suction panel 110d provided to extend in a direction perpendicular to the left and right side surfaces.

The control panel 120 may include a viewing window 122 through which a display of the control box may be viewable, and a cover member 125 that provide selective opening of the viewing window 122.

The cabinet 110, 120, and 150 may further include a bracket 150 that supports the plurality of suction panels 110 and the control panel 120. A plurality of the bracket 150 may be provided, and the plurality of brackets 150 may be provided to extend in the upward direction from the base 200.

The plurality of brackets 150 may include a first bracket 150a provided between the first suction panel 110a and the third suction panel 110c adjacent to the first suction panel 110a to support the first and third suction panels 110a and 110c. The first and third suction panels 110a and 110c may be coupled to both sides of the first bracket 150a.

The plurality of brackets 150 may further include a second bracket 150b provided between the second suction panel 110b and the control panel 120 adjacent to the second suction panel 110b to support the second suction panels 110b and the control panel 120. The second suction panels 110b and the control panel 120 may be coupled to both sides of the second bracket 150b.

The plurality of brackets 150 may further include a third bracket 150c provided between the second suction panel 110b and the fourth suction panel 110d to support the second suction panels 110b and the fourth suction panel 110d. The second and fourth suction panels 110b and 110d may be coupled to both sides of the third bracket 150c.

The plurality of brackets 150 may further include a fourth bracket 150d provided between the third and fourth suction panels 110c and 110d to support the third and fourth suction panels 110c and 110d. The third and fourth suction panels 110c and 110d may be coupled to both sides of the fourth bracket 150d.

A heat exchanger 130 may be installed inside of the outdoor device 10. The heat exchanger 130 may extend along inner side surfaces of the cabinet 110, 120, and 150. In other words, the heat exchanger 130 may be bent multiple times to extend along inner side surfaces of the plurality of suction panels 110. The heat exchanger 130 may be seated on edge portions that define long sides of the base 200 and edge portions that define short sides of the base 200. For example, the heat exchanger 130 may be bent three times and have four surfaces. The four surfaces may be provided to face the four suction panels 110.

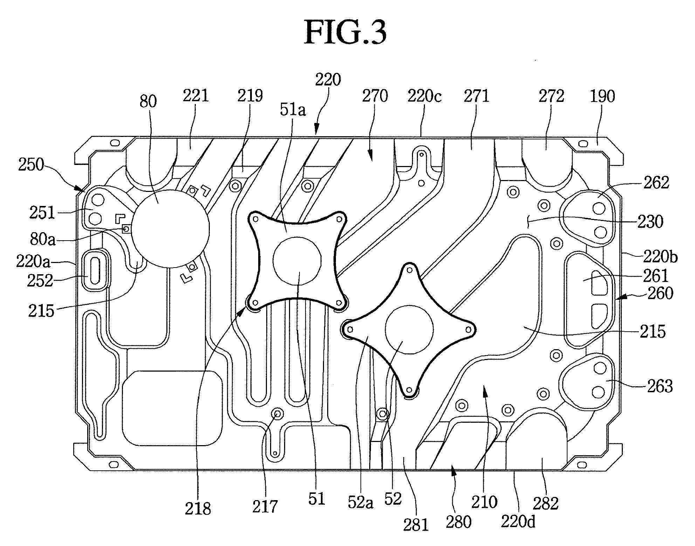

The four surfaces may include a first surface seated on the edge portion that defines the long side of the base 200 to face the front surface of the outdoor device 10; a second surface seated on the edge portion that defines the short side of the base 200 to face the left surface of the outdoor device 10; a third surface seated on the edge portion that defines the short side of the base 200 to face the right surface of the outdoor device 10; and a fourth surface seated on the edge portion that defines the long side of the base 200 to face the rear surface of the outdoor device 10. More specifically, the first surface of the heat exchanger 130 may be seated on a fourth edge seat 280 (see Fig. 3) provided on the base 200, and the second surface may be seated on a first edge seat 250 (see Fig. 3). The third surface may be seated on a second edge seat 260 (see Fig. 3), and the fourth surface may be seated on a third edge seat 270 (see Fig. 3).

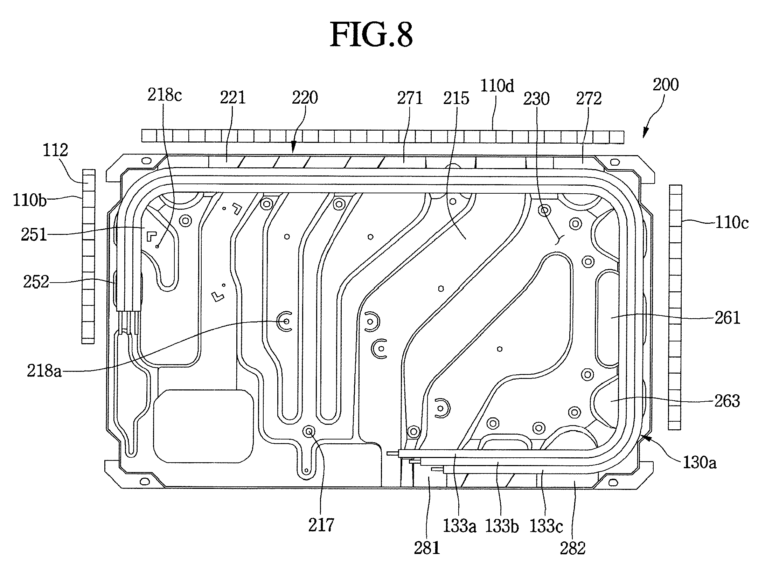

The heat exchanger 130 may include heat exchange piping 131 through which a refrigerant may flow, and a plurality of heat exchange fins 133 coupled to the heat exchange piping 131 to assist heat exchange of the refrigerant. The heat exchange piping 131 may form at least a portion of a refrigerant piping 90, and the plurality of heat exchange fins 133 may each provide a heat exchange surface between the refrigerant and air. Outdoor air introduced through the plurality of suction grills 112 of the suction panel 110 may be heat-exchanged while passing through the heat exchanger 130. The heat exchange piping 131 may be configured in three lines, and the plurality of heat exchange fins 133 may include a first fin 133a, a second fin 133b, and a third fin 133c, respectively, coupled to the heat exchange piping 131 configured in three lines (see Fig. 8).

The outdoor device 10 may include at least one blow fan 140 to introduce or draw in the outdoor air, and a fan housing 141 provided to surround the at least one blow fan 140 and guide air flow. The outdoor device 10 may further include a discharge panel 142 provided at one side of the at least one blow fan 140. The discharge panel 142 may include at least one discharge grill 145 to discharge air outside of the outdoor device 10.

The at least one blow fan 140 may be provided at an upper portion of the outdoor device 10, and the discharge panel 142 may be provided over the at least one blow fan 140. Air may upwardly flow after passing through the heat exchanger 130, and may then be discharged outside of the outdoor device 10 through the at least one blow fan 140 and the discharge panel 142.

A plurality of components may be provided at an upper side of the base 200. The base 200 may includes seats 215, 250, 260, 270, and 280 that support the plurality of components.

The plurality of components may include compressors 51 and 52 that compress a refrigerant; an oil separators 61 and 62 provided at discharge sides of the compressors 51 and 52; a gas-liquid separator 80 provided at inlet sides of the compressors 51 and 52 that separates a liquid refrigerant to supply a gaseous refrigerant to the compressors 51 and 52; and the refrigerant piping 90 coupled to the compressors 51 and 52, the oil separators 61 and 62, and the gas-liquid separator 80 to guide refrigerant flow. The compressors 51 and 52 may include a first compressor 51 and a second compressor 52. The oil separators 61 and 62 may include a first oil separator 61 provided at a discharge side of the compressor 51, and a second oil separator 62 provided at a discharge side of the compressor 52. The heat exchanger 130 may surround the compressors 51 and 52, the oil separators 61 and 62, and the gas-liquid separator 80.

Hereinafter, the base will be described with reference to the accompanying drawings.

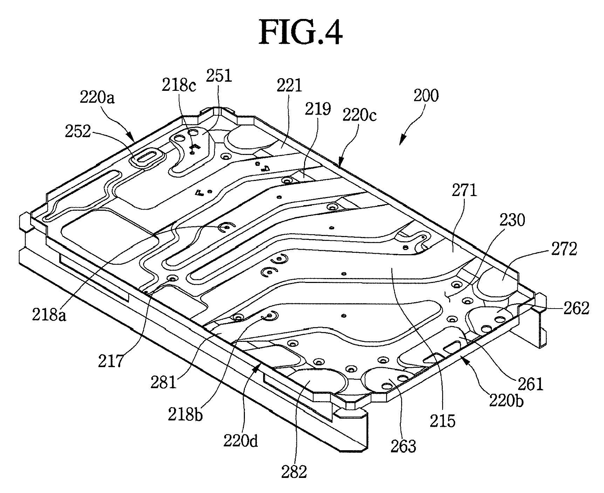

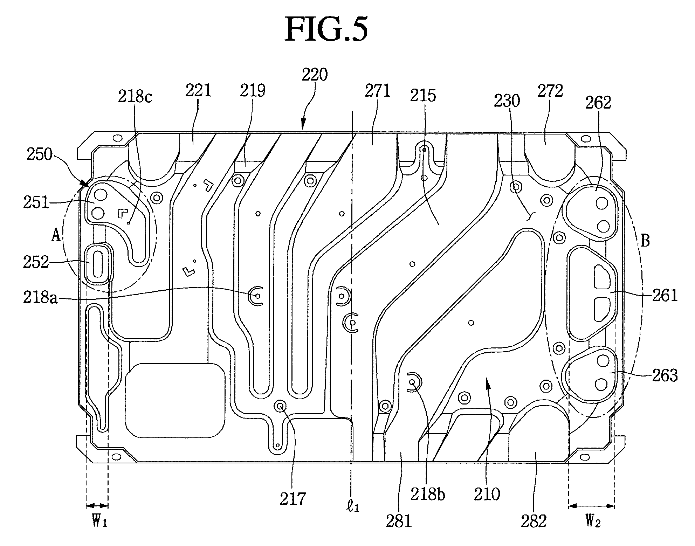

Fig. 3 is a plan view illustrating a state in which the plurality of components is provided on the base of the outdoor device of Fig. 1. Fig. 4 is a perspective view of the base of the outdoor device of Fig. 1. Fig. 5 is a plan view of the base of the outdoor device of Fig. 1.

Referring to Figs. 3 to 5, the base 200 of the outdoor device 10 according to an embodiment may include a base body 210 that defines a lower appearance thereof, and an edge portion 220 provided at an outer side of the base body 210. The base 200 may include the seats 215, 250, 260, 270, and 280, on which at least a portion of the plurality of components may be seated. The seats 215, 250, 260, 270, and 280 may include a main body seat 215 provided on the base body 210 and on which first components of the plurality of components may be seated, and edge seats 250, 260, 270, and 280 provided at the edge portion 220 and on which a second component of the plurality of components may be seated.

More specifically, the first components, that is, the compressors 51 and 52, and the gas-liquid separator 80 may be supported by the main body seat 215. For example, the compressors 51 and 52, and the gas-liquid separator 80 may be fastened to the main body seat 215. To support a plurality of the first components, a plurality of the main body seats 215 may be provided, and the plurality of main body seats 215 may be spaced apart from each other.

In the plurality of main body seat 215, a plurality of fastening holes 218, to which the compressors 51 and 52 and the gas-liquid separator 80 may be fastened, may be provided. The compressors 51 and 52 and the gas-liquid separator 80 may, respectively, include supports fastened to the plurality of fastening holes 218 by means of, for example, fastening members. For example, the supports may include first and second compressor supports 51 a and 52a, respectively, on which at the first and second compressors 51 and 52 may be supported, and a gas-liquid separator support 80a, on which the gas-liquid separator 80 may be supported.

The plurality of fastening holes 218 may include a first fastening hole 218a provided at a position to which the first compressor support 51 a may be coupled. For example, the first compressor support 51 a may be fastened to the first seat 215 at four positions, and accordingly, four first fastening holes 218a may be provided.

The plurality of fastening holes 218 may include a second fastening hole 218b provided at a position to which the second compressor support 52a may be coupled. For example, the second compressor support 52a may be fastened to the first seat 215 at four positions, and accordingly, four second fastening holes 218b may be provided.

The plurality of fastening holes 218 may include a third fastening hole 218c provided at a position to which the gas-liquid separator support 80a may be coupled. For example, the gas-liquid separator support 80a may be fastened to the first seat 215 at three positions, and accordingly, three third fastening holes 218c may be provided.

Liquid existing in or contained within the outdoor device 10, for example, defrost water or water introduced from the outside, such as rainwater, may be contained in the base body 210. The liquid may be discharged from the base 200 through a first discharge hole 217 defined in the base body 210. Accordingly, the base body 210 may be referred to as a "discharge pan".

The main body seat 215 may protrude in the upward direction from the base body 210. As the compressors 51 and 52, the oil separator 61 and 62, and the gas-liquid separator 80 may be supported by the main body seat 215, lower portions of the compressors 51 and 52, the oil separator 61 and 62, and the gas-liquid separator 80 may be spaced in the upward direction away from the base body 210. According to the configuration of the main body seat 215, the compressors 51 and 52, the oil separator 61 and 62, the gas-liquid separator 80 may not be affected by the liquid existing in or contained within the base body 210.

The edge portion 220 may extend along a periphery of the base body 210, and to be stepped up from the base body 210. That is, an upper surface of the edge portion 220 may be provided at a position higher than an upper surface of the base body 210. Also, the edge portion 220 may define two long sides and two short sides of the base 200.

A step 219 may be provided between the base body 210 and the edge portion 220. For example, the step 219 may extend at an incline toward the edge portion 220 from the base body 210. The edge portion 220 may be provided at a position higher than a position of the base body 210 by means of the step 219. Also, the edge portion 220 may extend a predetermined distance from the step 219 in an outward direction of the base body 210.

The edge portion 220 may include an edge body 221 provided at a position higher than a position of the base body 210, and the edge seats 250, 260, 270, and 280, which may protrude in the upward direction from the edge body 221 and on which the second component, that is, the heat exchanger 130, may be seated. At least a portion of the edge seats 250, 260, 270, and 280 may extend to the base body 210 through the step 219, and may be configured to be coupled to the main body seat 215. A plurality of the edge seats 250, 260, 270, and 280 may be provided, and the plurality of edge seats 250, 260, 270, and 280 may be spaced away from each other.

Liquid existing in or contained within the outdoor device 10, for example, defrost water or water introduced from the outside, such as rainwater, may be contained in the edge body 221. As the edge seats 250, 260, 270, and 280 are upwardly spaced away from the edge body 221, a lower portion of the heat exchanger 130 may be spaced in the upward direction away from the edge body 221. Accordingly, the heat exchanger 130 may not be affected by the liquid existing in or contained within the edge body 221.

The edge portion 220 may include a first edge portion 220a provided at a first side surface of the base body 210, a second edge portion 220b provided at a second side surface of the base body 210, a third edge portion 220c provided at a third side surface of the base body 210, and a fourth edge portion 220d provided at a fourth side surface of the base body 210. The first and second edge portions 220a and 220b may be provided to face each other, form the two short sides of the base 200, and may be positioned under the left and right side surfaces of the outdoor device 10. The third and fourth edge portions 220c and 220d may be provided to face each other, form the two long sides of the base 200, and may be positioned under the front and rear surfaces of the outdoor device 10. The third edge portion 220c may extend from the first edge portion 220a to the second edge portion 220b, and may be understood as an edge portion that connects the first and second edge portions 220a and 220b. A length of each of the first and second edge portions 220a and 220b may be shorter than a length of the third or fourth edge portion 220c or 220d.

The edge seats 250, 260, 270, and 280 may include a first edge seat 250 provided at the first edge portion 220a. A plurality of the first edge seats 250 may be provided. More specifically, the plurality of first edge seats 250 may include a first seat 251 and a second seat 252, which may be spaced away from each other.

The first seat 251 may extend from the first edge portion 220a to the base body 210 through the step 219, and may be coupled to the main body seat 215. The second seat 252 may protrude in the upward direction from the edge body 221, and may be spaced from the main body seat 215.

The second surface (left side surface) of the heat exchanger 130 may be seated on the first and second seats 251 and 252. A width in one direction of the first or second seat 251 or 252 may be defined as "W₁". The one direction may be a direction that defines the width of the heat exchanger 130 with respect to one portion of the heat exchanger 130 seated on the first and second seats 251 and 252, that is, a direction in which the first, second, and third fins are aligned from the first fin (133a, see Fig. 8) toward the third fin (133c, see Fig. 8).

The width W₁ in the one direction of the first or second seat 251 or 252 may correspond to the width of the heat exchanger 130 in the one direction, that is, to a sum of widths of the first to third fins 133a, 133b, and 133c. That is, the widths of the first and second seats 251 and 252 and the width of the heat exchanger 130 may be the same as W₁.

The edge seats 250, 260, 270, and 280 may include a second edge seat 260 provided at the second edge portion 220b. A plurality of the second edge seat 260 may be provided. More specifically, the plurality of second edge seats 260 may include a first seat 261, a second seat 262, and the third seat 263, which may be spaced away from each other.

The third surface (right side surface) of the heat exchanger 130 may be seated on the first to third seats 261, 262, and 263. A width in one direction of the first seat 261, the second seat 262, or the third seat 263 may be defined as "W₂". The width W₁ of the first edge seat 250 may be referred to as "a first width", and the width W₂ of the second edge seat 260 may be referred to as "a second width".

The width W₂ of the second edge seat 260 may be greater than the width W₁ of the first edge seat 250. Accordingly, the width w2 of the second edge seat 260 may be greater than the width of the heat exchanger 130 in the one direction, that is, a sum of widths of the first to third fins 133a, 133b, and 133c.

As such, as the width W₂ of the second edge seat 260 in the one direction is greater than the width W₁ of the first edge seat 250, shapes or sizes of the first and second edge seats 250 and 260 may form an asymmetrical structure with respect to a center line l1 that bisects the third edge portion 220c. The center line l1 may refer to a center line that divides the base body 210 into first and second portions, for example, left and right portions.

The edge seats 250, 260, 270, and 280 may include a third edge seat 270 provided at the third edge portion 220c. A plurality of the third edge seat 270 may be provided. More specifically, the plurality of third edge seats 270 may include a first seat 271 and a second seat 272, which may be spaced away from each other.

The first seat 271 may extends from the third edge portion 220c to the base body 210 through the step 219, and may be coupled to the main body seat 215. The second seat 272 may protrude in the upward direction from the edge body 221, and may be spaced from the main body seat 215.

The fourth surface (rear surface) of the heat exchanger 130 may be seated on the first and second seats 271 and 272. The fourth surface of the heat exchanger 130 may refer to one surface provided between the second and third surfaces of the heat exchanger 130. That is, the heat exchanger 130 may be bent at the second surface to extend to the fourth surface, and bent at the fourth surface to extend to the third surface.

The edge seats 250, 260, 270, and 280 may include a fourth edge seat 280 provided at the fourth edge portion 220d. A plurality of the fourth edge seat 280 may be provided. More specifically, the plurality of fourth edge seats 280 may include a first seat 281 and a second seat 282 which may be spaced away from each other.

The first seat 281 may extends from the fourth edge portion 220d to the base body 210 through the step 219, and may be coupled to the main body seat 215. The second seat 282 may protrude in the upward direction from the edge body 221, and may be spaced from the main body seat 215.

The first surface (front surface) of the heat exchanger 130 may be seated on the first and second seats 281 and 282. The first surface of the heat exchanger 130 may refer to a surface that faces the fourth surface of the heat exchanger 130, and may be bent and extended from the third surface.

As described above, a portion of the plurality of main body seats 215, and the first seats 251, 271, and 281 provided at the edge seats 250, 260, 270, and 280 may be connected to each other. The main body seats 215 connected to the first seats 251, 271, and 281 may be a seat on which the first compressor 51 or the second compressor 52 having a relatively greater load among the components provided on the base body 210 may be supported. The main body seats 215 and the first seats 251, 271, and 281 connected to each other may be provided to extend toward the short side of the base 200.

According to the above configuration, load or stress due to the first and second compressors 51 and 52 seated on the main body seat 215 may be transferred to the first seats 251, 271 and 281. Also, load or stress due to the heat exchanger 130 seated on the first seats 251, 271, and 281 may be transferred to the main body seat 215. Accordingly, load or stress due to first or second components may be prevented from being concentrated on or in a specific region of the base 200. As a result, there is an effect of reinforcing a strength of the base 200, and preventing damage to the base 200.

The base 200 may include a separation portion 230 as a "spaced portion" which spaces apart or separates the main body seat 215 from the edge seats 250, 260, 270, and 280. That is, the seats 252, 261, 262, 263, 272, and 282, and some of the edge seats 250, 260, 270, and 280 may be spaced apart from the main body seat 215 by the separation portion 230. According to this configuration, liquid existing in or contained within the base body 210 may be guided through the separation portion 230, and discharged through first discharge hole(s) 217. Accordingly, discharge may be easily performed from the base 200.

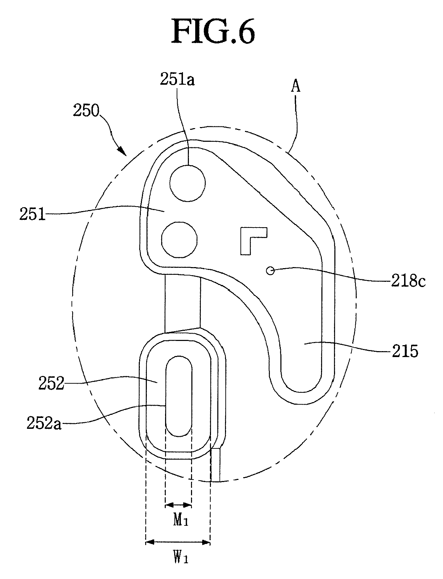

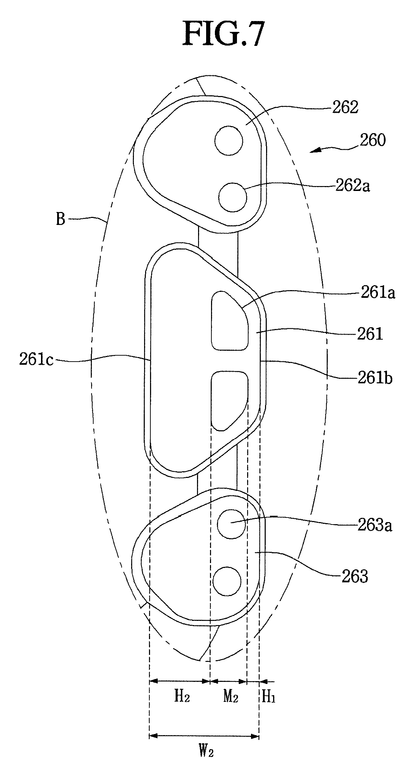

Fig. 6 is an exploded view illustrating region "A" of Fig. 5. Fig. 7 is an exploded view illustrating region "B" of Fig. 5.

Referring Figs. 3 to 7, the base 200 according to an embodiment may include a plurality of discharge holes. The plurality of discharge holes may include a first discharge hole 217 defined in the base body 210, and second discharge holes 251a, 252a, 261a, 262a, and 263a defined in the edge seats 250 and 260. A plurality of the first and second discharge holes may be provided, and each of the plurality of discharge holes may be spaced apart from each other. Due to height differences between the base body 210, the edge body 221, and the edge seats 250, 260, 270, and 280, the second discharge holes 251a, 252a, 261a, 262a, and 263a may be positioned higher than the first discharge hole 217.

The second discharge holes 251 a, 252a, 261 a, 262a, and 263a may be provided in the first edge seats 250 or the second edge seats 260, and may not be provided in the third and fourth edge seats 270 and 280. That is, a discharge hole may be provided in the edge portions 220a and 220b that define the two short sides of the base 200, and a discharge hole may not be provided in the edge portions 220c and 220d that define the two long sides of the base 200. This is because the plurality of legs 190 may be provided under the edge portions that defines the two long sides of the base 200. If a discharge hole is provided in the edge portions that define the two long sides of the base 200, liquid may be blocked by the legs 190, and thus, may not be easily discharged.

According to this embodiment, therefore, water or defrost water may be guided by providing, from among the edge seats 250, 260, 270, and 280, discharge holes only in the first and second edge seats 250, 260 provided at the edge portions that define the two short sides of the base 200. In other words, the second and third surfaces of the heat exchanger 130 may be seated on the edge seats provided at the two facing short sides of the base 200, and the discharge holes may be provided thereunder.

The defrost water generated by the heat exchanger 130 may be discharged through the second discharge hole(s) of the first and second edge seats 250 and 260, or may flow from the edge portion 220 to the base body 210 through the step 219. Also, the defrost water of the base body 210 may be discharged to under the base 200 through the first discharge hole(s) 217.

More specifically, the second discharge holes 251a, 252a, 261a, 262a, and 263a may include a discharge hole 251a defined in the first seat 251, and a discharge hole 252a defined in the second seat 252. The discharge holes 251 a and 251 b may be defined at an approximately central portion in an upper surface of the first and second seats 251 and 252.

Widths of the discharge holes 251a of the first seat 251, and the discharge holes 252a of the second seat 252 in one direction may be defined as M₁. The "one direction" may correspond to a direction that defines the width of the first seat part 251 or the second seat 252, and to a direction in which the heat exchange fins 133a, 133b, and 133c of the heat exchanger 130 extend. The width M₁ in the one direction may be smaller than the width W₁ of the first seats 251 or the second seat 252.

The second discharge holes 251a, 252a, 261a, 262a, and 263a may include a discharge hole 261 a defined in the first seat 261, a discharge hole 262a defined in the second seat 262, and a discharge hole 263a defined in the third seat 263. The discharge holes 261 a, 262a, and 263a may be defined on upper surfaces of the first to third seats 261, 262, and 263.

The second and third seats 262 and 263 may be provided at both sides of the first seat 261. For example, the discharge hole 261a of the first seat 261 may be larger than the discharge hole 262a of the second seat 262 or the discharge hole 263a of the third seat 263.

As described above, the width of the first seat 261 in the one direction may be W₂, and the width W₂ in the one direction may be greater than the width W₁ of the first seat 251 or the second seat 252 of the first edge seat 250.

The first seat 261 may include a first end 261 b that defines a first side end of the first seat 261 and a second end 261 c that defines a second side end of the first seat 261. The first and second ends 261 b and 261 c may extend parallel to each other. The width W₂ of the first seat 261 in the one direction may be understood as a minimum distance from the first side end 261 b to the second side end 261 c.

The discharge hole 261 a of the first seat 261 may have a width M₂ with respect to the one direction that defines the width W₂ of the first seat 261. The width M₂ of the discharge hole 261a may be greater than the width M₁ of the discharge holes 251 a and 251 b.

A minimum distance from the discharge hole 261 a to the first side end 261 b may be defined as H₁, and a minimum distance from the discharge hole 261 a to the second side end 261 c may be defined as H₂. H₁ may be referred to as a "first minimum distance", and the H₂ may be referred to as a "second minimum distance".

The minimum distance H₁ or the minimum distance H₂ may be smaller than the width of the heat exchanger 130, that is, a sum of the widths of the first to third fins 133a, 133b, and 133c of the heat exchanger 130. Also, the size of the minimum distance H₂ may be greater than the minimum distance H₁.

Accordingly, not only when the heat exchanger 130 is aligned to the discharge hole 261 a, but also when aligned to the first side end 261 b or to the second side end 261 c, at least a portion of the discharge hole 261 a may be positioned under the exchanger 130. As a result, liquid (defrost water) generated by the heat exchanger 130 may be discharged through the discharge hole 261 a.

A size of the discharge hole 261 a may be greater than a size of the discharge holes 251 a and 252a. When designing the heat exchanger 130, while a portion corresponding to the second surface of the heat exchanger 130 may be fixed as a predetermined size, portions corresponding to the third and fourth surfaces of the heat exchanger 130 may have different lengths or aligning positions. For example, according to the length of the portion corresponding to the fourth surface of the heat exchanger 130, the portion corresponding to the third surface may be provided adjacent to or spaced from the second surface. Embodiments provide a structure of discharge holes that allow discharge to be easily performed regardless of the position of a portion corresponding to the third surface of the heat exchanger 130.

The size of the discharge hole 261 a provided in the first seat 261 of the second edge seat 260 may be defined relatively large, so that a discharge hole may be provided under the heat exchanger 130 regardless of the installation position of the heat exchanger 130. This will be described hereinafter.

Fig. 8 is a plan view illustrating a state in which a heat exchanger is installed on the base of the outdoor device of Fig. 1. Referring to Fig. 8, heat exchanger 130a according to an embodiment may be installed on commonly used base 200 according to an embodiment. The heat exchanger 130a may have a shape bent multiple times so as to be seated on first to fourth edge seats 250, 260, 270, and 280.

The heat exchanger 130a may include first to third fins 133a, 133b, and 133c, respectively, coupled to heat exchange piping 131 provided in three lines. A plurality of the first to third fins 133a, 133b, and 133c may be, respectively, provided along a direction in which the three lines of the heat exchange piping 131 are bent.

That is, a portion of the first to third fins 133a, 133b, and 133c from among the plurality of first to third fins 133a, 133b, and 133c may be provided at the first edge seat 250. A sum of widths of the first to third fins 133a, 133b, and 133c installed on the first edge seat 250 may correspond to width W₁ of first edge seat 250.

Discharge holes 251 a and 252a having width M₁ smaller than the width W₁ may be defined in the first edge seat 250. Liquid generated at the second surface of the heat exchanger 130a may be discharged through the discharge holes 251 a and 252a.

An end portion of the heat exchanger 130a installed on the first edge seat 250 may be coupled to cabinet 110, 120, and 150. For example, the end portion of the heat exchanger 130a installed on the first edge seat 250 may be coupled to suction panel 110 or bracket 150.

Another portion of the first to third fins 133a, 133b, and 133c from among the plurality of first to third fins 133a, 133b, and 133c may be installed on second edge seat 260. A sum of widths of the first to third fins 133a, 133b, and 133c installed at the second edge seat 260 may be smaller than width W₂ of the second edge seat 260.

The another portion of the first to third fins 133a, 133b, and 133c may be seated to be aligned to a right side portion (with respect to Fig. 8) of the second edge seat 260, that is, first side end 261 b of the first seat 261. The first side end 261 b may refer to a side further from the first edge seat 250 between both side ends 261 b and 261 c of the second edge seat 260 with respect to the direction of the width W₂.

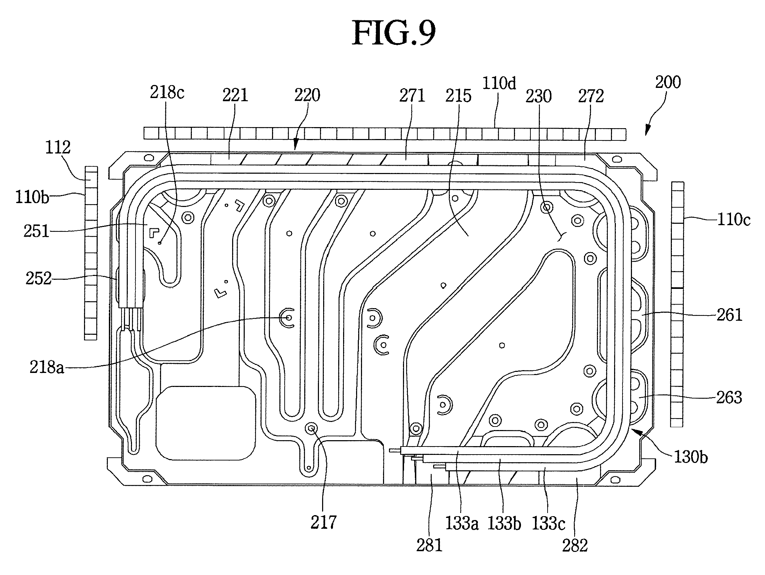

Accordingly, when compared with Fig. 9 described below, a length of a portion of the heat exchanger installed on the third edge seat 270 in the heat exchanger 130a may be formed relatively long.

Even though the heat exchanger 130a is aligned to the first side end 261 b, at least a portion of the discharge hole 261 a may be positioned under the heat exchanger 130a because the first minimum distance H₁ is smaller than the width of the heat exchanger 130a. Accordingly, defrost water generated by the heat exchanger 130a may be discharged to under the base 200 through the discharge hole 261 a.

Fig. 9 is a plan view illustrating a state in which a heat exchanger according to an embodiment is installed on the base according to an embodiment. Referring to Fig. 9, heat exchanger 130b according to this embodiment may be installed on commonly used base 200 according to an embodiment. The heat exchanger 130b may have a shape bent multiple times so as to be seated on first to fourth edge seats 250, 260, 270, and 280.

The heat exchanger 130b may include first to third fins 133a, 133b, and 133c, respectively, coupled to heat exchange piping 131 provided in three lines. A plurality of the first to third fins 133a, 133b, and 133c may be, respectively, provided along a direction in which the three lines of the heat exchange piping 131 is bent.

That is, a portion of the first to third fins 133a, 133b, and 133c from among the plurality of first to third fins 133a, 133b, and 133c may be installed at the first edge seat 250, similar to the embodiment of Fig. 8, and repetitive description has been omitted. Another portion of the first to third fins 133a, 133b, and 133c from among the plurality of first to third fins 133a, 133b, and 133c may be provided on the second edge seat 260. A sum of widths of the first to third fins 133a, 133b, and 133c installed at the second edge seat 260 may be smaller than the width W₂ of the second edge seat 260.

The another portion of the first to third fins 133a, 133b, and 133c may be seated to be aligned adjacent to a left side portion of the second edge seat 260, that is, adjacent to second side end 261 c. The left side portion may refer to a side more adjacent to the first edge seat 250 between both side ends 261 b and 261 c of the second edge seat 260 with respect to the direction of the width W₂.

Accordingly, when compared to Fig. 8 described above, a length of a portion of the heat exchanger installed at the third edge seat 270 in the heat exchanger 130b may be relatively short. Referring to Figs. 8 and 9, an installation position of the heat exchanger 130 at the second edge seat 260 may be changed for one structure of the base 200. Accordingly, although a length or size of the heat exchanger 130 may be varied corresponding to a capacity or size of an outdoor device, commonly used base 200 may be utilized.

Also, even though the heat exchanger 130b is aligned more adjacent to the second side end 261c than the first side end 261 b, at least a portion of the discharge hole 261a may be positioned under the heat exchanger 130b because the second minimum distance H₂ is smaller than the width of the heat exchanger 130b. Accordingly, defrost water generated by the heat exchanger 130b may be discharged to under the base 200 through the discharge hole 261 a.

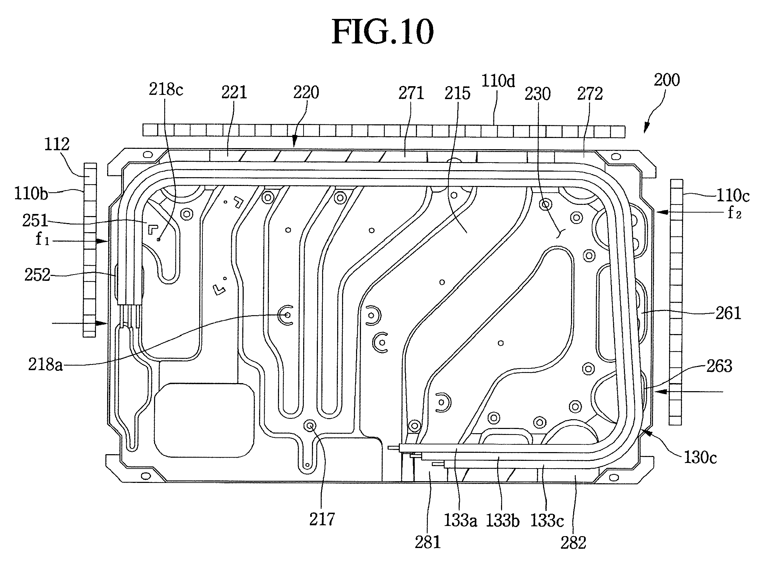

Fig. 10 is a plan view illustrating a state in which a heat exchanger according to still another embodiment is installed on the base according to an embodiment. Referring to Fig. 10, heat exchanger 130c according to this embodiment may be installed on commonly used base 200 according to an embodiment. The heat exchanger 130c may have a shape bent multiple times so as to be seated on first to fourth edge seats 250, 260, 270, and 280.

The heat exchanger 130c may include first to third fins 133a, 133b, and 133c, respectively, coupled to heat exchange piping 131 provided in three lines. A plurality of the first to third fins 133a, 133b, and 133c may be, respectively, provided along a direction in which the three lines of heat exchange piping 131 is bent.

That is, a portion of the first to third fins 133a, 133b, and 133c from among the plurality of first to third fins 133a, 133b, and 133c may be provided at the first edge seat 250. A direction in which the portion of first to third fins 133a, 133b, and 133c are installed, that is, a direction, in which the heat exchanger 130 seated on the first edge seat 250 extends, may be defined parallel to the second suction panel 110b, and approximately perpendicular to an air flow f₁ introduced through the second suction panel 110b.

Another portion of the first to third fins 133a, 133b, and 133c from among the plurality of first to third fins 133a, 133b, and 133c may be provided on the second edge seat 260. A sum of widths of the first to third fins 133a, 133b, and 133c installed at the second edge seat 260 may be smaller than the width W₂ of the second edge seat 260.

A direction in which the different portion of first to third fins 133a, 133b, and 133c are provided, that is, a direction, in which the heat exchanger 130 seated on the second edge seat 260 extends, may be formed to cross the third suction panel 110c, and to be inclined with respect to air flow f₂ introduced through the third suction panel 110c.

Accordingly, an area of heat exchange of air passing through the heat exchanger 130 seated on the second edge seat 260 may be increased. As a result, performance of heat exchange may be improved.

Thus, as the width of the second edge seat 260 is sufficiently large, and the position or shape of the heat exchanger 130 installed on the second edge seat 260 may be varied, there is an effect that heat exchangers having various sizes and shapes may be used with one common base structure. Also, the size of the discharge hole 261 a provided at the first seat 261 of the second edge seat 260 may be sufficiently large, so that a discharge hole may be defined under the heat exchanger 130 and discharge may be easily performed.

According to embodiments, a seat part that supports a heat exchanger may be provided in an asymmetrical structure, so that a base with a predetermined shape may be used regardless of a change in a shape or size of the heat exchanger. Thus, the base may be commonly used. Also, costs for molds for manufacturing the base may be reduced as the base may be commonly used.

More particularly, as a size of a first edge seat provided on one side surface of an edge portion may be greater than a size of a second edge seat provided on the other side surface, with respect to a center line of a base, a design for changing the shape or size of one portion of a heat exchanger supported by the one surface of the edge portion may be prepared according to a capacity of an outdoor device.

More specifically, when viewed from a top, a width in a lateral direction of the first edge seat may be greater than a width in a lateral direction of the second edge seat. Therefore, a length of one portion of the heat exchanger supported by the second edge seat may be changed, or the one portion of the heat exchanger may extend at an incline with respect to a direction of air flow.

Also, a width or size of a discharge hole provided at the second edge seat may be formed greater, that is, sufficiently greater, than a width or size of a discharge hole provided at the first edge seat. Accordingly, although a length of one portion of the heat exchanger supported by the second edge seat may be changed, or one portion of the heat exchanger may extend at an incline with respect to the direction of air flow, liquid existing in or contained within an edge portion may be easily discharged because the discharge hole of the second edge seat may be positioned under the heat exchanger.

Embodiments disclosed herein provide an outdoor device for an air conditioner including a base which may be commonly used for heat exchangers with shapes different from each other.

The outdoor device may further comprise a plurality of suction panels that defines a front surface, both side surfaces, and a rear surface of the outdoor device. The outdoor device may include a heat exchanger provided inside of the plurality of suction panels, and bent and extended along each of the surfaces of the suction panels; and a base provided under the plurality of suction panel and including two long sides corresponding to the front and rear surfaces and two short sides corresponding to the side surfaces. The base may include a base body including at least one main body seat, on which at least one compressor is supported; and an edge portion including at least one edge seat, which is provided along an outer side of the base body and on which the heat exchanger is supported. The at least one edge seat may include a first edge seat, on which at least a first portion of the heat exchanger is seated; and a second edge seat, on which a second portion of the heat exchanger is seated and which has a width greater than a width of the first edge seat.

The outdoor device may include at least one first discharge hole defined in the second edge seat, and aligned under the heat exchanger. The second edge seat may include a first side end and a second side end, and in which a minimum distance between the first side end and the second side end may be greater that a width of the heat exchanger.

A minimum distance from the first side end to the at least one first discharge hole may be smaller than the width of the heat exchanger. A minimum distance from the second side end to the at least one first discharge hole may be smaller than the width of the heat exchanger. A distance from the first side end to the first edge seat may be greater than a distance from the second side end to the second edge seat. The first side end and the second side end may extend in parallel with each other. The heat exchanger may be provided to be aligned with the first side end, and at least a portion of the at least one first discharge hole may be positioned under the heat exchanger.

The first side end and the second side end may extend in parallel with each other, and the heat exchanger may be provided to be aligned with the second side end, and at least a portion of the at least one first discharge hole may be positioned under the heat exchanger.

The first edge seat may include at least one second discharge hole, and wherein a size of the at least one second discharge hole of the second edge seat may be greater than a size of the at least one first discharge hole of the first edge seat.

The outdoor device may further include third and fourth edge seats that supports the heat exchanger, in which the fourth, first, third, and second edge seats, respectively, support first to fourth surfaces of the heat exchanger.

A portion of the heat exchanger seated on the third edge seat includes a portion defined between another portion of the heat exchanger seated on the first edge seat and still another portion of the heat exchanger seated on the second edge seat.

The first and second edge seats are provided at positions corresponding to the two short sides of the base, and wherein the third and fourth edge seats may be provided at positions corresponding to the two long sides of the base.

The heat exchanger may include a heat exchange pipe configured in three lines, and wherein a width of a heat exchanger fin may be a sum of widths of a plurality of fins respectively coupled to the three lines of the heat exchange pipe.

The outdoor device may further include a plurality of legs provided under edges that defines the two long sides in the base, wherein the second edge seat may be provided at edges that defines the two short sides in the base.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An outdoor device (10) for an air conditioner, the outdoor device (10) comprising:
a plurality of suction panels (110) that defines a front surface, both side surfaces, and a rear surface of the outdoor device (10);
a heat exchanger (130) provided inside of the plurality of suction panels (110), and bent and extended along each of the surfaces of the suction panels (110); and
a base (200) provided under the plurality of suction panels (110) and including two long sides corresponding to the front and rear surfaces and two short sides corresponding to the side surfaces, wherein the base (200) includes:
a base body (210) including at least one main body seat (215), on which at least one compressor (51, 52) is supported; and
an edge portion (220) including at least one edge seat (250, 260, 270, 280), which is provided along an outer side of the base body (210) and on which the heat exchanger (130) is supported, wherein the at least one edge seat (250, 260, 270, 280), includes:
a first edge seat (250), on which at least a first portion of the heat exchanger (130) is seated; and
a second edge seat (260), on which a second portion of the heat exchanger (130) is seated and which has a width greater than a width of the first edge seat (250).

2. The outdoor device according to claim 1, further including:
at least one first discharge hole (217) defined in the second edge seat (260), and aligned under the heat exchanger (130).

3. The outdoor device according to claim 1 or 2, wherein the second edge seat (260) includes a first side end and a second side end, and wherein a minimum distance between the first side end and the second side end is greater that a width of the heat exchanger (130).

4. The outdoor device according to claim 3, wherein a minimum distance from the first side end to the at least one first discharge hole (217) is smaller than the width of the heat exchanger (130).

5. The outdoor device according to claim 3, wherein a minimum distance from the second side end to the at least one first discharge hole (217) is smaller than the width of the heat exchanger (130).

6. The outdoor device according to claim 3, wherein a distance from the first side end to the first edge seat (250) is greater than a distance from the second side end to the second edge seat (260).

7. The outdoor device according to any one of claims 3 to 6, wherein the first side end and the second side end extend in parallel with each other, and
wherein the heat exchanger (130) is provided to be aligned with the first side end, and at least a portion of the at least one first discharge hole (217) is positioned under the heat exchanger (130).

8. The outdoor device according to any one of claims 3 to 7, wherein the first side end and the second side end extend in parallel with each other, and
wherein the heat exchanger (130) is provided to be aligned with the second side end, and at least a portion of the at least one first discharge hole (217) is positioned under the heat exchanger (130).

9. The outdoor device according to any one of claims 2 to 8, wherein the first edge seat (250) includes at least one second discharge hole (251 a, 252a, 261 a, 262a, 263a), and wherein a size of the at least one second discharge hole (251 a, 252a, 261 a, 262a, 263a) of the second edge seat (260) is greater than a size of the at least one first discharge hole (217) of the first edge seat (250).

10. The outdoor device according to any one of claims 1 to 9, further including third and fourth edge seats (270, 280) that supports the heat exchanger (130), wherein the fourth, first, third, and second edge seats (280, 250, 270, 260), respectively, support first to fourth surfaces of the heat exchanger (130).

11. The outdoor device according to any one of claims 1 to 10, wherein a portion of the heat exchanger (130) seated on the third edge seat (270) includes a portion defined between another portion of the heat exchanger (130) seated on the first edge seat (250) and still another portion of the heat exchanger (130) seated on the second edge seat (260).

12. The outdoor device according to any one of claims 1 to 11, wherein the first and second edge seats (250, 260) are provided at positions corresponding to the two short sides of the base (200), and wherein the third and fourth edge seats (270, 280) are provided at positions corresponding to the two long sides of the base (200).

13. The outdoor device according to any one of claims 1 to 12, wherein the heat exchanger (130) includes a heat exchange pipe configured in three lines, and wherein a width of a heat exchanger fin is a sum of widths of a plurality of fins respectively coupled to the three lines of the heat exchange pipe.

14. The outdoor device according to any one of claims 1 to 13, further including a plurality of legs provided under edges that defines the two long sides in the base (200), wherein the second edge seat (260) is provided at edges that defines the two short sides in the base (200).

15. An air conditioner comprising the outdoor device according to any one of of claims 1 to 14.
